# EUROPEAN PATENT SPECIFICATION

(11) **EP 0 976 324 B1**
(45) Date of publication and mention of the grant of the patent: **03.03.2004**
(21) Application number: 99114839.6
(22) Date of filing: 29.07.1999
(51) Int. Cl.: A01M 25/00, A01M 1/20

(54) **Device for the fixing of bait stations at ground level**
Vorrichtung zum Befestigen von Köderdosen am Erdboden
Dispositif pour fixer des stations d'appât au niveau du sol

(30) Priority: 30.07.1998 US 126245
(43) Date of publication of application: 02.02.2000
(73) Proprietor: Wiesener, Mark, 16567 Mühlenbeck (DE); Wiesener, Bernd, 16567 Mühlenbeck (DE)
(72) Inventor: Wiesener, Mark, 16567 Mühlenbeck (DE); Wiesener, Bernd, 16567 Mühlenbeck (DE)
(74) Representative: Hoffmann, Klaus-Dieter, Dipl.-Ing.

(56) References cited:
- US-A- 4 208 829
- US-A- 4 497 131
- US-A- 4 660 320

## Description

### Field and background of the invention

The present invention relates to a bait station having wall means defining an interior with at least one access opening in the wall means for allowing rodents, especially rats to enter the station, and a bottom having at least one assigned opening, the bottom having a bottom surface. Normally such bait stations are fixed to the ground and secured against undesired opening with fixing elements which can be attached to the wall means of the bait station and driven into the soil to hold the bait station to the ground.

In connection with the fighting of rodents like rats by means of rat poisons outdoors as e.g. in parks, sports grounds, on children's playgrounds and in dike-areas, the public and concerned lawmakers in many states, but especially in the United States of America and in Great-Britain, increasingly ask pest controllers to practically exclude a possible danger through poisoning by the laying of bait in so-called safety boxes of plastic or metal. But the laying of baits in such safety boxes is also insufficient to meet the higher safety requirements if the bait boxes, when inadequately anchored, are wilfully torn off and bait can be shaken out of them. At the same time there is a high risk for pest controllers that the relatively expensive saftey boxes are stolen.

Bait stations provided with simple anchoring means are known from US-4 208 829.

### Summary of the invention

The present invention is therefore based on the need to provide a bait station of the type mentioned above which can be fixed in a flexible manner in different types of soil, practically flush with the ground, and which is not removable by unauthorized persons, whereby the risk of being stolen - apart from the application of brute force - will be minimized.

According to the invention, this task is solved by at least one ground-anchor having a wedge-shaped end for being driven into the ground on which the bottom surface of the bait station is to lie flush, the ground-anchor has an opposite end with a recess in the opposite end, the recess being adapted to receive a pushing element for driving the ground-anchor into the ground when the ground-anchor is in a substantially vertical drive-in position, the ground-anchor having a center; a tension element having a first end connected to the center of the ground-anchor and an opposite second end extending through the at least one assigned opening in the bottom of the bait station, the second end extending into the interior of the bait station; and
a safety lock engaged at the bottom of the bait station adjacent the at least one assigned opening for locking a portion of the tension element to the bottom of the bait station at the at least one assigned opening after the tension element has been pulled to rotate the ground-anchor from its drive-in position to a substantially horizontal anchoring position in the ground.
Preferably the tension element comprises a chain with said second end extending through the at least one assigned opening, said safety lock comprises a safety bolt for receiving the chain and for engaging one link of the chain to lock the second end of the chain with respect to the bottom of the bait station when the chain has been pulled to move the ground-anchor into its substantially horizontal anchoring position. In the actual product the tension element of the invention is formed by a steel cable and the safety lock is a cable lock which is equivalent to the safety bolt for holding a chain forming the tension element of the invention. The back end of the ground-anchor in the actual product is provided with a slot which can receive the pushing member formed by a screwdriver that can be driven by a hammer to push the wedge into the ground. Hereby the cable trails up from the ground-anchor und is thereafter used to pull on the anchor to rotate it into its substabtially horizontal anchoring position, at which point means are provided in the bait station locking the tension element. As a result, the bottom surface of the bait station is held firmly against the ground, and the bait station cannot be removed unless access is achieved through an access opening to disconnect the safety lock.

The bait station of the invention is fixed rigidly to the ground in a surprisingly effective manner by using the principle of a common wedge-drop-anchor or ceiling dowel for the manipulation-safe anchoring of the bait station especially for rats also in loose grounds, which can be removed and adjusted only after re-opening of the bait station by the pest controller or an authorized technician.

Any undesired shaking out of the bait from the bait station is thus prevented and the increased safety requirements with regard to the fighting of rodents are satisfactorily met. At the same time the theft-risk to the installer of the relatively expensive safety box is considerably reduced. The invention provides a bait station which may be fixed simple, safe and flexible outdoors and which normally can be removed only by the pest controller and/or technician. It is also of advantage that the anchoring technique of the bait station according to the invention is not visible from outside because the special fixing of the end of the tension element extending into the bait station - this end may formed as a rope loop - cannot be seen on the interior surface of the bottom of the bait station in its locked condition.

### Brief description of the drawings

In the drawings:
**Fig. 1** is a graphic presentation of a bait station anchored to the ground, whereby the tension element of the bait station is formed by a chain fixed to the ground-anchor and the ground-anchor is shown both in its position when driven into the ground as well as in its anchored position;
**Fig. 2** is a graphic presentation of the movable wedge-like ground-anchor in its driven-in position with the use of a pushing bolt; and
**Fig. 3** is a perspective representation of the assembled parts of the bait station in accordance with the actual product for its fixing to the ground.

### Description of the preferred embodiment

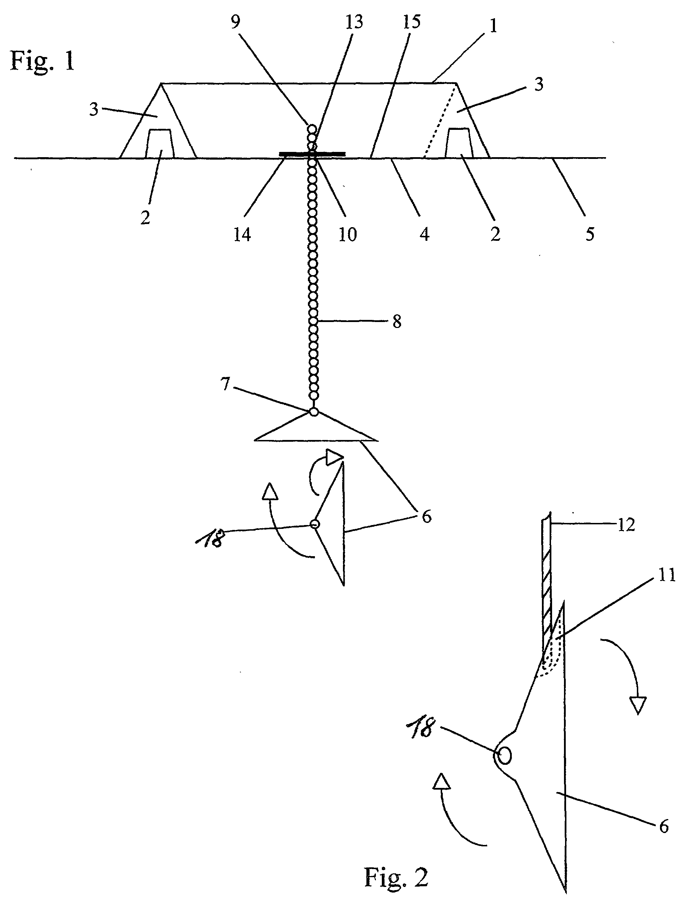

Referring to Fig. 1 a tent-shaped bait box 1 is schematically shown, with access openings 2 at its faces 3 for rodents to be caught. The bait box 1 can be made of plastic or metal and has to be equipped with a special locking mechanism which can be opened only by skilled personnel to gain access to the interior of bait box 1. Bait box 1 is anchored flush with the ground 5 by at least one movable, wedge-like or wedge-shaped ground-anchor 6, at which one end 7 of a tension element 8 is fixed, which is preferrably formed as chain as shown by Fig. 1. The other end 9 of the tension element 8 extends into the bait box 1 through an assigned opening 10 provided in the bottom 4 of bait box 1.

Of course two or more tension elements 8 each with the ground-anchors 6 and the spaced openings 10 in the bottom 4 of the bait box 1 might be provided.

The wedge-like ground-anchor 6 which is shown in Fig. 2 and in Fig. 1 in the lower presentation in its drive-in position has an admission area or recess 11 for the application of a fixing or pushing bolt 12 (Fig. 2). The ground-anchor 6 is driven with the fixing bolt or member 12 as deep into the loose ground 5 as desired and is thus brought into the vertical position shown at the bottom of Fig. 1. Pulling tension is applied to the anchor 6 at the end 9 of the chain 8 extending through opening 10 in bottom 4 of the bait box 1 in vertical direction to the ground 5. This turns the ground-anchor 6 clock-wise around its center of weight 18 into the horizontal anchoring position shown above the vertical position of anchor 6 in Fig. 1. During the simultaneous tensioning process of chain 2, a safety bolt or lock 14 through which chain 8 is pulled, receives a chain link 13 located directly at the assigned opening 10 in the interior of the bait box 1 in such a manner that the chain in box 1 lies on the interior surface 15 of the bottom 4 of the bait box 1. Bolt 14 rigidly tensions the chain 8 at link 13 on the interior surface 15 that it is flush with the bottom 4 of the bait box 1 and the ground 5. After closing the bait box 1 with the safety locking mechanism, the anchoring system of the bait box 1 is not visible from outside, and the unfastening of the anchoring of the bait box 1 and/or the taking out of the bait is possible only after the authorized re-opening of the bait box 1.

As shown in Fig. 2, anchor 6 has a wedge-shaped end that faces downwardly when the anchor is in the vertical drive-in position, so that it can be driven into loose ground by member 12 engaged in recess 11. Lower end 7 of chain 8 is connected near the center 18 of anchor 6 as shown in Fig. 1 so that anchor 6 rotates when it is pulled up by chain 8. Instead of chain 8, the tension element may be a steel or plastic rope that does not stretch or a plastic chain that does not stretch.

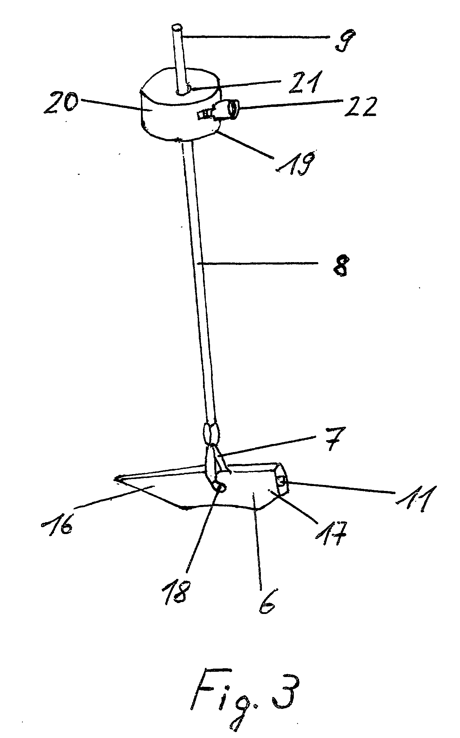

Fig.3 shows an anchoring system of the bait station of the invention in accordance with the actual product for its fixing to the ground and shows the position of the ground-anchor 6 in its substantially horizontal anchoring position. The ground-anchor 6 has a wedge-shaped end 16 for being driven into the ground 5 when the anchor 6 is in the vertical drive-in position. A slot I 1 is provided at the opposite back end 17 of the anchor 6 which can receive a screwdriver 12 that can be driven by a hammer to push the wedge 16 into the ground 5. Lower end 7 of a steel cable 8 forming the tension element of the anchoring system of the bait box 1 is connected near the center 18 of anchor 6 as shown in Fig. 3. The steel cable 8 trails up from the anchor 6 and is thereafter used to pull on the anchor 6 to rotate it into its substantially horizontal anchoring position shown in Fig. 3. The safety lock 19 of this embodiment is a cable lock, which is functionally equivalent to the exchangeable safety bolt 14 for holding the chain 8 inside the bait box 1. The cable lock 19 provides a cylindrical element 20 like a disk comprising a central bore hole 21 and a fixing screw 22 extending through the shell of the cylindrical element 20. The end 9 of the steel cable 8 extends through the centric bore hole 21 of the disk 20 and is fixed by the fixing screw 22 of the cable lock 19 in a manner that the end 9 of steel cable 8 is rigidly fixed on the interior surface 15 of the bottom 4 of bait box 1 in the anchored position of the ground anchor 6.

## Claims

1. Bait station (1) having wall means (3) defining an interior with at least one access opening (2) in the wall means (3) for allowing rodents, especially rats to enter the station (1), and a bottom (4) having at least one assigned opening (10), the bottom (4) having a bottom surface (15),
**characterized by**
at least one ground-anchor (6) having a wedge-shaped end (16) for being driven into the ground (5) on which the bottom surface of the bait station (1) is to lie flush, the ground-anchor (6) having an opposite end (17) with a recess (11) in the opposite end (17), the recess (11) being adapted to receive a pushing element (12) for driving the ground-anchor (6) into the ground (5) when the ground-anchor (6) is in a substantially vertical drive-in position, the ground-anchor (6) having a center ( 18);
a tension element (8) having a first end (7) connected to the center (18) of the ground-anchor (6) and an opposite second end (9) extending through the at least one assigned opening (10) in the bottom (4) of the bait station (1), the second end (9) extending into the interior of the bait station (1); and
a safety lock (19) engaged at the bottom (4) of the bait station (1) adjacent the at least one assigned opening (10) for locking a portion of the tension element (8) to the bottom (4) of the bait station (1) at the at least one assigned opening (10) after the tension element (8) has been pulled to rotate the ground-anchor (6) from its drive-in position to a substantially horizontal anchoring postion in the ground (5).

2. Bait station according to claim 1, **characterized in that** the tension element (8) comprises a chain with said second end (9) extending through the at least one assigned opening (10), said safety lock (19) comprises a safety bolt (14) for receiving the chain and for engaging one link (13) of the chain to lock the second end (9) of the chain with respect to the bottom (4) of the bait station (1) when the chain has been pulled to move the ground-anchor (6) into its substantially horizontal anchoring position.

3. Bait station according to claim 1 or 2, **characterized in that** the pushing member (12) comprises a fixing bolt for engaging into the recess (11) of the ground-anchor (6).

4. Bait station according to claim 2, **characterized in that** the chain (8) comprises a plastic chain that does not stretch.

5. Bait station according to claim 1, **characterized in that** the tension element (8) is a steel cable and the safety lock (19) is a cable lock formed by a cylindrical element (20) comprising a central bore hole (21) and a fixing screw (22) extending through the shell of the cylindrical element (20).

6. Bait station according to claim 1, **characterized in that** the tension element (8) is a plastic rope which does not stretch.

7. Bait station according to claim 1, **characterized in that** the safety lock (19) is an adjustable, vise-like fixing device, which rigidly fixes the chain (8) in the anchored position of the ground-anchor (6).

8. Bait station according to claim 1, **characterized in that** the safety lock (19) comprises an exchangeable safety bolt (14) which is led through the chain-link (13) located directly at the assigned opening (10) inside the bait station (1) rigidly fixes the chain in the anchored position of the ground-anchor (6).

9. Bait station according to claim 1, **characterized in that** the tension element (8) is a rod with a threaded end which is led through the assigned opening (10) in the bottom (4) of the bait station (1) on the interior surface (15) of the bait station (1) and which by means of an adjustable lock nut, rigidly fixes the rod (8) in the anchored position of the ground-anchor (6).

## Patentansprüche

1. Köderstation (1) mit Wandelementen (3) , die einen Innenraum umschließen, der mindestens eine Zugangsöffnung (2) in den Wandelementen (3) für den Zugang von Nagetieren, insbesondere von Ratten in die Station (1) aufweist, und mit einem eine Oberfläche (15) aufweisenden Boden (4) mit mindestens einer zugeordneten Öffnung (10),
**gekennzeichnet durch**
mindestens einen Erdanker (6) mit einem keilförmigen Ende (16) zum Eintreiben in den Erdboden (5), auf den die Bodenoberfläche (15) der Köderstation (1) flach auflegbar ist, wobei der Erdanker (17) an seinem gegenüberliegenden Ende (17) eine Ausnehmung (11) aufweist, die zur Aufnahme eines Stößelelementes (12) ausgelegt ist, mit dem der Erdanker (6) in den Erdboden (5) eintreibbar ist, wenn sich der einen Mittelpunkt (18) aufweisende Erdanker (6) im wesentlichen in einer vertikalen Eintreibposition befindet,
ein Spannelement (8) mit einem ersten Ende (7), das mit dem Mittelpunkt (18) des Erdankers (6) verbunden ist, und mit einem entgegengesetzten zweiten Ende (9), das sich **durch** die mindestens eine zugeordnete Öffnung (10) im Boden (4) der Köderstation (1) in den Innenraum letzterer erstreckt, und
eine mit dem Boden (4) der Köderstation (1) angrenzend an die mindestens eine zugeordnete Öffnung (10) in Eingriff stehende Sicherungsverriegelung (9) zum Festklemmen eines Teils des Spannelementes (8) am Boden (4) der Köderstation (1) an der mindestens einen zugeordneten Öffnung (10) nach Ziehen des Spannelementes (8) derart, daß der Erdanker (6) aus seiner Eintreibposition in eine im wesentlichen horizontale Verankerungsposition im Erdboden (5) gedreht ist.

2. Köderstation nach Anspruch 1, **dadurch gekennzeichnet, daß** das Spannelement (8) eine Kette mit dem genannten zweiten Ende (9) aufweist, die sich durch die mindestens eine zugeordnete Öffnung (10) erstreckt, daß die Sicherungsverriegelung (19) einen Sicherheitbolzen (9) zum Aufnehmen der Kette und Eingreifen in ein Glied (13) letzterer zur Verriegelung des zweiten Endes (9) der Kette in Bezug auf den Boden (4) der Köderstation (1) nach Ziehen der Kette, um den Erdanker (6) in seine im wesentlichen horizontale Verankerungsposition zu bewegen.

3. Köderstation nach Anspruch 1 oder 2, **dadurch gekennzeichnet, daß** das Stößelelement (12) einen Befestigungsbolzen zum ein Eingriff bringen in die Ausnehmung (11) des Erdankers (6) aufweist.

4. Köderstation nach Anspruch 2, **dadurch gekennzeichnet, daß** die Kette (8) eine sich nicht dehnende Kunststoffkette umfaßt.

5. Köderstation nach Anspruch 1, **dadurch gekennzeichnet, daß** das Spannelement (8) ein Stahlseil und die Sicherheitsverriegelung (19) eine Seilverriegelung ist, die von einem zylindrischen Element (20) gebildet ist, das eine zentrische Bohrung (21) und eine Befestigungsschraube (22) aufweist, die sich durch die Hülse des zylindrischen Elements (20) erstreckt.

6. Köderstation nach Anspruch 1, **dadurch gekennzeichnet, daß** das Spannelement (8) ein sich nicht dehnendes Kunststoffseil ist.

7. Köderstation nach Anspruch 1, **dadurch gekennzeichnet, daß** die Sicherheitsverriegelung (19) eine verstellbare schraubstockartige Befestigungsvorrichtung ist, die die Kette (8) in der Verankerungsposition des Erdankers (6) starr festlegt.

8. Köderstation nach Anspruch 1, **dadurch gekennzeichnet, daß** die Sicherheitsverriegelung (19) einen auswechselbaren Sicherheitsbolzen (14) aufweist, der durch das Kettenglied (13), das unmittelbar an der zugeordneten Öffnung (10) innerhalb der Köderstation (1) angeordnet ist, geführt ist und die Kette in der Verankerungsposition des Erdankdsers (6) starr festlegt.

9. Köderstation nach Anspruch 1, **dadurch gekennzeichnet, daß** das Spannelement (8) eine Stange mit einem Gewindeende ist, das durch die zugeordnete Öffnung (10) im Boden (4) der Köderstation (1) auf die Innenoberfläche (15) der Köderstation (1) geführt ist, wobei die Stange (8) mittels einer einstellbaren Sicherungsmutter starr in der Verankerungsposition des Erdankers (6) festlegbar ist.

## Revendications

1. Station d'appât (1) ayant des moyens de paroi (3) définissant un intérieur avec au moins une couverture d'accès (2) dans les moyens de paroi (3) pour permettre aux rongeurs, en particulier des rats, de pénétrer dans la station (1), et un fond (4) ayant au moins une ouverture attribuée (10), le fond (4) ayant une surface de fond (15),
**caractérisé par**
au moins un ancrage de sol (6) ayant une extrémité cunéiforme (16) pour être entraînée dans le sol (5) sur lequel la surface de fond de la station d'appât (1) repose de niveau, l'ancrage de sol (6) ayant une extrémité opposée (17) avec un évidement (11) dans l'extrémité opposée (17), l'évidement (11) étant conçue pour recevoir un élément de poussée (12) pour entraîner l'ancrage de sol (6) dans le sol (5) quand l'ancrage de sol (6) est en position essentiellement vertical de pénétration, l'ancrage de sol (6) ayant un centre (18);
un élément de tension (8) ayant une première extrémité (7) connectée au centre (18) de l'ancrage de sol (6) et une seconde extrémité opposée (9) s'étendant à travers au moins l'ouverture (10) assignée dans le fond (4) de la station d'appât (1), la seconde extrémité (9) s'étendant à l'intérieur de la station d'appât (1), et
un verrou de sécurité (19) engagé au fond (4) de la station d'appât (1) adjacent à au moins une ouverture assignée (10) pour verrouiller une partie de l'élément de tension (8) au fond (4) de la station d'appât (1) à au moins l'ouverture assignée (10) après que l'élément de tension (8) ai été tiré pour tourner l'ancrage de sol (6) depuis sa position de pénétration vers une position d'ancrage sensiblement horizontale dans le sol (5).

2. Station d'appât selon la revendication 1, **caractérisée en ce que** l'élément de tension (8) comprend une chaîne avec ladite seconde extrémité (9) s'étendant à travers au moins ladite ouverture assignée (10), ledit verrou de sécurité (19) comprend un boulon de sécurité (14) pour recevoir la chaîne et pour entrer en prise avec un maillon (13) de la chaîne pour verrouiller la seconde extrémité (9) de la chaîne par rapport au fond (4) de la station d'appât (1) quand la chaîne a été poussée pour déplacer l'ancrage de sol (6) dans sa position d'ancrage essentiellement horizontale.

3. Station d'appât selon la revendication 1 ou 2, **caractérisée en ce que** l'organe de poussée (12) comprend un boulon de fixation pour s'engager dans l'évidement (11) de l'ancrage de sol (6).

4. Station d'appât selon la revendication 2, **caractérisée en ce que** la chaîne (8) comprend une chaîne en plastique qui ne s'étire pas.

5. Station d'appât selon la revendication 1, **caractérisée en ce que** l'élément de tension (8) est un câble en acier et le verrou de sécurité (19) est un plomb-cadenas formé par un élément cylindrique (20) comprenant un trou central (21) et une vis de fixation (22) s'étendant à travers la coque de l'élément cylindrique (20).

6. Station d'appât selon la revendication 1, **caractérisée en ce que** l'élément de tension (8) est une corde en plastique qui ne s'étend pas.

7. Station d'appât selon la revendication 1, **caractérisée en ce que** le verrou de sécurité (19) est un dispositif de fixation ajustable formant étau qui fixe de manière rigide la chaîne (8) dans la position ancrée de l'ancrage de sol (6).

8. Station d'appât selon la revendication 1, **caractérisé en ce que** le verrou de sécurité (19) comprend un boulon de sécurité échangeable (14) qui est guidé à travers le maillon de chaîne (13) logé directement à l'ouverture assignée (10) à l'intérieur de la station d'appât (1), fixe de manière rigide la chaîne dans la position ancrée de l'ancrage de sol (6).

9. Station d'appât selon la revendication 1, **caractérisé en ce que** l'élément de tension (8) est une barre avec une extrémité filetée qui est guidée à travers l'ouverture assignée (10) dans le fond (4) de la station d'appât (1) sur la surface intérieure (15) de la station d'appât (1) et qui, fixe rigidement la barre (8) dans la position ancrée de l'ancrage de sol (6) au moyen d'une rainure de verrouillage ajustable.
